# EUROPEAN PATENT APPLICATION

(11) **EP 4 723 237 A1**
(43) Date of publication of application: **08.04.2026**
(21) Application number: 25191883.5
(22) Date of filing: 25.07.2025
(51) Int. Cl.: H01M 4/525, H01M 4/58

(54) **POSITIVE ELECTRODE ACTIVE MATERIAL, POSITIVE ELECTRODE SLURRY, POSITIVE ELECTRODE SHEET AND BATTERY**

(30) Priority: 12.09.2024 CN 202411281588; 19.02.2025 WO PCT/CN2025/078047
(71) Applicant: Eve Power Co., Ltd., Jingmen, Hubei 448000 (CN)
(72) Inventor: LIU, Fanfen, Jingmen, Hubei, 448000 (CN); CHEN, Meng, Jingmen, Hubei, 448000 (CN); WEN, Shengyao, Jingmen, Hubei, 448000 (CN); WU, Tingting, Jingmen, Hubei, 448000 (CN); GAO, Jianhang, Jingmen, Hubei, 448000 (CN)
(74) Representative: Berggren Oy

(57) **Abstract**

A positive electrode active material, a positive electrode slurry, a positive electrode sheet and a battery are provided herein. The positive electrode active material includes lithium manganese iron phosphate and lithium-rich lithium ferrite; where a mass ratio of the lithium-rich lithium ferrite added in the positive electrode active material is 0.5%-5%; a particle size D50 of the lithium manganese iron phosphate is d₁, the particle size D50 of the lithium-rich lithium ferrite is d₂, and 0.05 ≤ d₁/d₂ ≤ 0.32.

## Description

### TECHNICAL FIELD

The present disclosure relates to the field of battery technology, and in particular to a positive electrode active material, a positive electrode slurry, a positive electrode sheet and a battery.

### BACKGROUND

Lithium manganese iron phosphate (LMFP) is a new generation of positive electrode material for a lithium-ion battery and an upgraded version of a lithium iron phosphate (LFP) material. Due to the presence of transition metal manganese (Mn) in the lithium manganese iron phosphate material, a voltage platform of the lithium manganese iron phosphate is made higher than that of lithium iron phosphate, and an energy density of the lithium manganese iron phosphate is also superior to that of lithium iron phosphate.

### SUMMARY

The present disclosure provides a positive electrode active material, including lithium manganese iron phosphate and lithium-rich lithium ferrite. A mass ratio of lithium-rich lithium ferrite in the positive electrode active material is 0.5%-5%; the particle size D50 of lithium manganese iron phosphate is d₁, the particle size D50 of lithium-rich lithium ferrite is d₂, and 0.05≤ d₁/d₂ ≤ 0.32.

The present disclosure also provides a positive electrode slurry, including the positive electrode active material as described above, a conductive agent, a binder and a solvent.

The present disclosure also provides a positive electrode sheet, which is prepared using the positive electrode active material described above or the positive electrode slurry described above.

The present disclosure also provides a battery, including the positive electrode sheet described above.

### DETAILED DESCRIPTION

In the description of the present disclosure, unless otherwise clearly specified and limited, the terms "interconnected", "connected", and "fixed" should be understood in a broad sense. For example, it may be a fixed connection, a detachable connection, or an integral connection; it may also be a mechanical connection or an electrical connection; it may be a direct connection or an indirect connection through an intermediate medium, it may be the communication inside two elements or the interaction relationship between two elements. For one of ordinary skill in the present art, the specific meanings of the above terms in the present disclosure may be understood according to the specific circumstances.

In the present disclosure, unless otherwise clearly specified and limited, a first feature being "above" or "below" a second feature may include the first feature being direct contact with the second feature, or may include the first feature being not in contact with the second feature but being in contact with each other through another feature between them. Moreover, a first feature being "above", "on" and "top" a second feature includes the first feature being directly above and obliquely above the second feature, and the first feature having a higher horizontal height than the second feature. The first feature being "below", "under" and "underneath" a second feature includes the first feature being directly below and obliquely below the second feature, and the first feature having a lower horizontal height than the second feature.

In the description of the present embodiment, the directional or positional relationships such as the terms "upper", "lower", "left", "right", "front" and "rear" are based on the directional or positional relationships shown in the drawings, and are for the convenience of description and simplification of operation, rather than indicating or implying that the device or element referred to must have a specific direction, be constructed and operated in a specific direction, and therefore cannot be understood as limiting the present disclosure. In addition, the terms "first" and "second" are used to distinguish in the description and have no special meaning.

Due to the presence of transition metal manganese in the lithium manganese iron phosphate material, both the lithium ion diffusion rate and electronic conductivity of lithium manganese iron phosphate are also made lower than those of the lithium iron phosphate material (the lithium ion diffusion rate of lithium manganese iron phosphate is 10-15 cm²/S, the lithium ion diffusion rate of lithium iron phosphate is 10-14 cm²/S; the electronic conductivity of lithium manganese iron phosphate is 10-13 S/cm, and the electronic conductivity of lithium iron phosphate is 10-9 S/cm), so that the gram capacity of lithium manganese iron phosphate is lower than that of lithium iron phosphate. In addition, lithium hexafluorophosphate in the electrolyte solution will react with trace moisture in the battery, and the generated hydrofluoric acid will destroy the structure of lithium manganese iron phosphate. In combination of the presence of Jahn-Teller effect of manganese ions, manganese will be dissolved during the cycle, reducing the stability of the positive electrode material. In addition, the dissolved manganese ions will be reduced and precipitated at the negative electrode, destroying the SEI film and making the cycle performance of lithium manganese iron phosphate much poorer than that of lithium iron phosphate.

The positive electrode active material provided in the embodiment of the present disclosure includes lithium manganese iron phosphate and lithium-rich lithium ferrite. When the positive electrode active material is applied to the battery, by compounding lithium-rich lithium ferrite with lithium manganese iron phosphate, the lithium-rich lithium ferrite can supplement the active lithium that is irreversibly lost in the lithium manganese iron phosphate during the first charge of the battery, thereby increasing the gram capacity. After adding lithium-rich lithium ferrite, an active oxygen can also be released during the first charge process to help generation of a SEI film rich in Li₂O components, thereby enhancing the kinetic performance, reducing DCR, and increasing the constant current ratio. The additional active lithium released by the first delithiation of lithium-rich lithium ferrite can continuously provide a lithium source during the cycle process, thereby improving the cycle performance. Moreover, lithium-rich lithium ferrite is alkaline, which may neutralize the hydrofluoric acid generated by the reaction of electrolyte and moisture in the battery, stabilize the structure of lithium manganese iron phosphate during the cycle process, reduce the dissolution of manganese, and improve the cycle performance. By controlling a mass ratio of lithium manganese iron phosphate to lithium-rich lithium ferrite to be (19-199):1, it can not only ensure that lithium-rich lithium ferrite can exert a better effect, but also avoid the issues such as serious gas production caused by excessive addition of lithium-rich lithium ferrite, while maintaining good rate performance. By controlling the particle size D50 of lithium manganese iron phosphate and lithium-rich lithium ferrite to meet the condition of 0.05 ≤ d₁/d₂ ≤ 0.32, a better stacking effect can be produced between the two, thereby establishing a more effective conductive network and increasing the gram capacity.

The positive electrode slurry provided in the embodiment of the present disclosure can achieve both good gram capacity and cycle performance by including the positive electrode active material described above, a conductive agent, binder and a solvent.

The positive electrode sheet provided in the embodiment of the present disclosure is prepared by adopting the positive electrode slurry described above, which enables the battery to have both good gram capacity and cycle performance.

The battery provided in the embodiment of the present disclosure, by including the positive electrode sheet described above, can achieve both good gram capacity and cycle performance and have good comprehensive performance.

In a first aspect, the embodiment of the present disclosure provides a positive electrode active material, including lithium manganese iron phosphate and lithium-rich lithium ferrite (Li₅FeO₄). That is, in the embodiment of the present disclosure, lithium manganese iron phosphate and lithium-rich lithium ferrite are compounded to obtain a positive electrode active material. When the positive electrode active material provided in the embodiment of the present disclosure is applied to a battery, in the first aspect, the lithium-rich lithium ferrite can supplement the active lithium that is irreversibly lost in the lithium manganese iron phosphate during the first charge of the battery, thereby increasing the gram capacity of the battery; in the second aspect, after adding the lithium-rich lithium ferrite, the active oxygen can be also released during the first charge to help generate a SEI film rich in Li₂O components, thereby enhancing the kinetic performance, reducing DCR, and increasing the constant current ratio; in the third aspect, the additional active lithium released by the first de-lithiation of the lithium-rich lithium ferrite can continuously provide a lithium source during the cycle process, thereby improving the cycle performance; in the fourth aspect, the lithium-rich lithium ferrite is alkaline, which can neutralize the hydrofluoric acid generated by the reaction of the electrolyte and moisture in the battery, stabilizing the structure of the lithium manganese iron phosphate during the cycle process, reducing the dissolution of manganese, and improving the cycle performance.

Therefore, by adding lithium-rich lithium ferrite to the lithium manganese iron phosphate material, the problem of low gram capacity and poor cycle performance existed when lithium manganese iron phosphate is used alone as the positive electrode active material has been addressed. It can also retain the advantage of high energy density of lithium manganese iron phosphate material, which has obvious advantages over the case of using lithium manganese iron phosphate or lithium iron phosphate alone as the positive electrode active material in the related art. That is, lithium manganese iron phosphate has a higher voltage platform and energy density than lithium iron phosphate, and by compounding lithium manganese iron phosphate with lithium-rich lithium ferrite, the shortages of low gram capacity and poor cycle performance thereof are remedied, thus achieving better comprehensive performance.

The mass ratio of lithium-rich lithium ferrite in the positive electrode active material is 0.5%-5%, the particle size D50 of lithium manganese iron phosphate is d₁, and the particle size D50 of lithium-rich lithium ferrite is d₂, 0.05≤ d₁/d₂ ≤ 0.32. When the added amount of lithium rich lithium ferrite is too low, it is difficult to play the relevant effect, and when the added amount of lithium-rich lithium ferrite is too large, it is easy to cause serious gas production, thereby affecting the gram capacity and cycle performance. Therefore, in the embodiment of the present disclosure, the mass ratio of lithium-rich lithium ferrite in the positive electrode active material is set to 0.5%-5%. When the small particles of lithium manganese iron phosphate and the large particles of lithium-rich lithium ferrite are compounded, a better stacking effect can be achieved, so that lithium manganese iron phosphate and lithium-rich lithium ferrite establish a more effective conductive network, thereby playing the effect of improving gram capacity and cycle performance, and maintaining good rate performance.

Specifically, when lithium-rich lithium ferrite with larger particle size is compounded with lithium manganese iron phosphate with smaller particle size, the lithium-rich lithium ferrite with larger particle size can be stacked, and there will be gaps between adjacent lithium-rich lithium ferrite particles, while the lithium manganese iron phosphate particles with smaller particle size will fill in these gaps, so that lithium manganese iron phosphate and lithium-rich lithium ferrite can be evenly distributed and contacted with each other, reducing or avoiding the problems such as delamination of lithium manganese iron phosphate and lithium-rich lithium ferrite. As such, lithium manganese iron phosphate and lithium-rich lithium ferrite can be fully interacted between the two to better exert their effects.

Exemplarily, d₁/d₂ may be 0.05, 0.06, 0.07, 0.08, 0.09, 0.1, 0.15, 0.2, 0.25, 0.3, or 0.32.

It is understandable that the positive electrode active material may include only lithium manganese iron phosphate and lithium-rich lithium ferrite, or may include both lithium manganese iron phosphate and lithium-rich lithium ferrite. The positive electrode active material may include other positive electrode active materials.

As a preferred embodiment of the present disclosure, the positive electrode active material is composed of lithium manganese iron phosphate and lithium-rich lithium ferrite. That is, the positive electrode active material only includes lithium manganese iron phosphate and lithium-rich lithium ferrite, so as to better achieve the advantages of both lithium manganese iron phosphate and lithium-rich lithium ferrite, and reduce or avoid the defects of lithium manganese iron phosphate by lithium-rich lithium ferrite.

In some embodiments, the particle size D50 of lithium manganese iron phosphate satisfies: 0.8 µm ≤d₁≤ 1.6 µm. The particle size D50 of lithium manganese iron phosphate is relatively small, which is beneficial to improving the discharge performance and cycle life of the battery when applied to the battery. This is because the material with small particle size has a larger specific surface area and a shorter ion diffusion path, which is beneficial to the intercalation and deintercalation reaction of lithium ions, thereby increasing the charge and discharge rate performance of the battery and reducing the internal resistance of the battery. However, if the particle size D50 of lithium manganese iron phosphate is too small, it is easy to form an agglomerate, which increases the difficulty of preparing the battery materials, and too small particle size may also cause the mechanical strength of the material to decrease, further reducing the cycle life and stability of the material.

Exemplarily, the particle size D50 of lithium manganese iron phosphate is 0.8 µm, 1.0 µm, 1.2 µm, 1.4 µm or 1.6 µm.

In some embodiments, the particle size D50 of the lithium-rich lithium ferrite satisfies: 5 µm ≤ d₂ ≤ 15 µm. The particle size D50 of the lithium-rich lithium ferrite is larger, which can achieve a better stacking effect with the lithium manganese iron phosphate with small particle size, thereby establishing a more effective conductive network and better playing the effects of improving the gram capacity and cycle performance. The lithium manganese iron phosphate with the small particle size surrounds the lithium-rich lithium ferrite with the large particle size, so that the lithium-rich lithium ferrite and the lithium manganese iron phosphate material better interact between the two.

Exemplarily, the particle size D50 of the lithium-rich lithium ferrite is 5 µm, 7 µm, 10 µm, 12 µm, 14 µm or 15 µm.

It should be noted that D50 refers to the corresponding particle size when the cumulative particle size distribution percentage of a sample reaches 50%, also known as the medium particle size or median particle size.

In some embodiments, the mass ratio of lithium-rich lithium ferrite in the positive electrode active material is greater than or equal to 0.5% and less than 2%. When the addition ratio of lithium-rich lithium ferrite is within this range, it can have a more obvious effect on improving the gram capacity, while improving the cycle performance and maintaining good rate performance, thereby remedying the defects of lithium manganese iron phosphate over lithium iron phosphate to a certain extent and improving its comprehensive performance.

Exemplarily, the mass ratio of lithium-rich lithium ferrite in the positive electrode active material is 0.5%, 0.8%, 1%, 1.2%, 1.5% or 1.8%.

The mass ratio of lithium-rich lithium ferrite in the positive electrode active material is preferably 1.5%-1.8%. When the mass ratio of lithium-rich lithium ferrite in the positive electrode active material is within this range, it can be further ensured that both the gram capacity and cycle performance of lithium manganese iron phosphate are improved, and the good rate performance is maintained.

In some embodiments, the mass ratio of lithium-rich lithium ferrite in the positive electrode active material is 2%-5%. Within a certain range, as the addition ratio of lithium-rich lithium ferrite increases, the improvement effect on gram capacity and cycle performance is better, but if the addition amount of lithium-rich lithium ferrite is too high, it is also easy to cause excessive gas production, which instead affects the gram capacity and cycle performance. When the mass ratio of lithium-rich lithium ferrite in the positive electrode active material is 2%-5%, the improvement on both gram capacity and cycle performance is relatively obvious, and the rate performance can be maintained within a good range.

Exemplarily, the mass ratio of lithium-rich lithium ferrite in the positive electrode active material is 2%, 2.2%, 2.5%, 2.7%, 3.0%, 3.2%, 3.5%, 3.8%, 4.0%, 4.2%, 4.5%, 4.7% or 5.0 %.

In some embodiments, the mass ratio of lithium-rich lithium ferrite in the positive electrode active material is 3.1%-5%. That is, the mass ratio of lithium-rich lithium ferrite in the positive electrode active material may be preferably set to 3.1%-5%, so that the lithium-rich lithium ferrite can fully exert its effect and avoid the problem of the serious gas production caused by excessive lithium-rich lithium ferrite.

In some embodiments, the specific surface area of lithium manganese iron phosphate is S₁, the specific surface area of lithium-rich lithium ferrite is S₂, and 7 ≤ S₁ /S₂ ≤ 40. The particle size of lithium manganese iron phosphate is small, and its specific surface area is large, while the particle size of lithium-rich lithium ferrite is large, and its specific surface area is small. By setting the specific surface areas of the two to meet the condition of 7 ≤ S₁/S₂ ≤ 40, it is beneficial for the two to achieve a better stacking effect, thereby establishing a more effective conductive network and exerting a better effect.

Exemplarily, S₁/S₂ may be 7, 10, 12, 15, 17, 20, 22, 25, 28, 30, 32, 35, 38, or 40.

It is understandable that the specific surface area of the material is inversely proportional to the particle size, that is, the larger the particle size, the smaller the specific surface area, and the smaller the particle size, the larger the specific surface area. When the specific surface area is larger, it can provide more reaction sites, and when the specific surface area is smaller, it has relatively more stable properties. As the main material of the positive electrode active material, lithium manganese iron phosphate has a small particle size and a large specific surface area, which can provide more reaction sites and is conducive to improving the energy density. The addition ratio of lithium-rich lithium ferrite is relatively small, which is mainly to provide lithium supplementation and other functions. The particle size of lithium-rich lithium ferrite is larger and the specific surface area thereof is smaller, which has a certain stability and better play the role.

In some embodiments, the specific surface area of lithium manganese iron phosphate satisfies: 8 m²/g ≤ S₁ ≤ 18 m²/g. If the specific surface area of lithium manganese iron phosphate is too small, it is easy to affect the gram capacity, so that the gram capacity is not exerted as expected, and when the specific surface area is large, the problems such as agglomeration easily occur in the process of preparing the positive electrode slurry using the positive electrode active material.

Exemplarily, the specific surface area of lithium manganese iron phosphate may be 8 m²/g, 10 m²/g, 12 m²/g, 14 m²/g, 16 m²/g, or 18 m²/g.

In some embodiments, the specific surface area of the lithium-rich lithium ferrite satisfies: 0.2 m²/g ≤ S₂ ≤ 2.4 m²/g. If the specific surface area of the lithium-rich lithium ferrite is too small, it will also affect the gram capacity, making the gram capacity not exerted as expected. If the specific surface area of the lithium-rich lithium ferrite is too large, it will easily lead to a large amount of gas produced by the battery, such that the gas is difficult to be completely removed during the production manufacturing process, thereby affecting the performance of the battery.

Exemplarily, the specific surface area of the lithium-rich lithium ferrite may be 0.2 m²/g, 0.5 m²/g, 0.7 m²/g, 1 m²/g, 1.2 m²/g, 1.5 m²/g, 1.8 m²/g, 2.0 m²/g or 2.4 m²/g.

In some embodiments, in the positive electrode active material, the molar ratio of a lithium element to a manganese element is (1.5-2.9): 1, and the molar ratio of the lithium element to an iron element is (1.7-3.5): 1. That is to say, the molar ratio of the lithium element to the manganese element in the positive electrode active material provided in the embodiment of the present disclosure as a whole is (1.5-2.9): 1, and the molar ratio of the lithium element to the iron element is (1.7-3.5) : 1. By controlling the molar ratio of the lithium element to the manganese element and the molar ratio of the lithium element to the iron element in the positive electrode active material within a suitable range, the advantages of the mixture of lithium manganese iron phosphate and lithium-rich lithium ferrite can be fully utilized, the cycle performance is better, and the voltage platform can be guaranteed while the gram capacity is increased, thereby achieving better comprehensive performance.

In some embodiments, the molecular formula of lithium manganese iron phosphate is Liₐ M_{b}(PO₄)_{c}.

M is Fe_{1-x-z}MnₓD_{z}, D is one or more of Mg, Ti, V, Ni, Co, Al, Nb, Y, Mo, Sr, La, Zr or B; 0.95 ≤a/c≤1.1, 0.90≤ b/c≤ 1.15, 1.01≤ a/b≤ 1.1. By controlling the ratio of lithium to metal, the ratio of lithium to phosphorus, and the ratio of metal to phosphorus in the lithium manganese iron phosphate material within a suitable range, the material can be endowed with a better crystal structure, thereby achieving better comprehensive performance.

In a second aspect, an embodiment of the present disclosure provides a positive electrode slurry, including the positive electrode active material as described above, a conductive agent, a binder and a solvent.

The advantageous effects of the positive electrode slurry provided in the embodiments of the present disclosure are basically consistent with those of the positive electrode active material, which will not be repeated herein.

In some embodiments, the positive electrode slurry further includes a dispersant. Addition of the dispersant to the positive electrode slurry can improve fluidity, make the dispersion performance of the positive electrode active material better, and maintain the stability of the positive electrode slurry.

It is understandable that the conventional materials in the art may be used for the conductive agent, the binder, the dispersant and the solvent, and the embodiments of the present disclosure do not impose any specific limitation thereto.

Exemplarily, the conductive agent may be selected from one or more of carbon black, conductive graphite, carbon nanotube, carbon fiber or graphene. The binder may be selected from an oily binder such as polyvinylidene fluoride or a water-based binder such as carboxymethyl cellulose, polyacrylic acid and polyamide. The dispersant may be selected from an inorganic dispersant such as metal oxide or hydroxide; or an organic dispersant such as a polymer and a surfactant. The solvent may be selected from a solvent such as N-methyl-2-pyrrolidone, dimethyl carbonate, ethylene carbonate, divinyl carbonate, and dimethyl sulfoxide.

In addition, the positive electrode active material, the conductive agent, the binder, the dispersant and the solvent may also be conventionally configured in the art, and the embodiments of the present disclosure do not impose any specific limitation thereto.

In a third aspect, an embodiment of the present disclosure provides a positive electrode sheet, which is prepared using the positive electrode active material as described above or the positive electrode slurry as described above.

The positive electrode slurry as described above is coated on the current collector, and then the processes such as drying, punching and rolling are performed to obtain the positive electrode sheet.

The advantageous effects of the positive electrode sheet provided in the embodiment of the present disclosure are basically consistent with those of the positive electrode active material, which will not be repeated herein.

In some embodiments, the compaction density of the positive electrode sheet is 2.2 g/cm³ -2.6 g/cm³. Compaction density=surface density/material thickness. The compaction density has a great influence on the performance of the battery. On one hand, by increasing the compaction density of the positive electrode sheet, more active substances may be accommodated, thereby increasing the energy storage capacity of the battery and optimizing the utilization rate of the material. On the other hand, with the increase in the compaction density, the conductive channel and bridge inside the positive electrode sheet can also be increased, such that the electrons and ions are transmitted more smoothly to improve the conductivity of the battery. In addition, the positive electrode sheet with the large compaction density has also better structural stability. However, if the compaction density of the positive electrode sheet is too large or too small, it is easy to cause an increase in the internal resistance and polarization of the battery. In the embodiment of the present disclosure, the compaction density of the positive electrode sheet is set to 2.2 g/cm ³ -2.6 g/cm ³, which can exert the effect of improving the gram capacity and cycle performance while the increase of the internal resistance and polarization of the battery is reduced or avoided, thereby improving the comprehensive performance of the battery.

In a fourth aspect, an embodiment of the present disclosure provides a battery, including the positive electrode sheet as described above.

The advantageous effects of the battery provided in the embodiments of the present disclosure are basically consistent with those of the positive electrode active material, which will not be repeated herein.

The embodiments of the present disclosure are further described in conjunction with specific Examples below. It should be understood that these examples are only used to illustrate the present disclosure and are not intended to limit the scope of the present disclosure. The experimental methods in the following examples that do not specify specific conditions are usually based on the conditions recommended by the manufacturer.

It should be noted that, except for the differences already described, the other conditions in the examples and the comparative examples of the present disclosure remain the same.

The manufacturing process of the battery in the examples and comparative examples of the present disclosure includes: compounding lithium manganese iron phosphate with lithium-rich lithium ferrite in a proportion to form a positive electrode active material; mixing and stirring the positive electrode active material with a conductive agent, a binder, a dispersant and a solvent to prepare a positive electrode slurry, in which the positive electrode active material accounts for 97.5%, the conductive agent is carbon black and accounts for 0.7%, the binder is polyvinylidene fluoride and accounts for 1.5%, and the dispersant is a polyester substance and accounts for 0.3%. An artificial graphite is used as the negative electrode active material, mixed and stirred with a conductive agent and a binder to prepare a negative electrode slurry; the negative electrode active material accounts for 96.9%, the conductive agent is carbon black, which accounts for 0.5%, and the binder is sodium carboxycellulose and styrene-butadiene rubber, where sodium carboxycellulose accounts for 1.1% and styrene-butadiene rubber accounts for 1.5%. The positive electrode sheet and the negative electrode sheet are respectively made using the positive electrode slurry and the negative electrode slurry through coating and sheet making processes; the positive electrode sheet, the negative electrode sheet and the separator, the electrolyte solution, the cover plate and an aluminum shell are assembled together into a square aluminum shell battery, and then the finished battery is obtained after subjecting to formation and grading.

### Example 1

In this Example, the positive electrode active material is composed of lithium manganese iron phosphate and lithium-rich lithium ferrite, where the addition ratio of lithium-rich lithium ferrite is 1.6%. The particle size D50 of lithium manganese iron phosphate is 1.2 µm, and the specific surface area is 13 m²/g. The D50 of lithium-rich lithium ferrite is 10 µm, and the specific surface area is 1.3 m²/g. The battery is prepared according to the manufacturing process of the battery as described above.

### Example 2

In this Example, the positive electrode active material is composed of lithium manganese iron phosphate and lithium-rich lithium ferrite, where the addition ratio of lithium-rich lithium ferrite is 2.9%. The particle size D50 of lithium manganese iron phosphate is 1.2 µm, and the specific surface area is 13 m²/g. The D50 of lithium-rich lithium ferrite is 10 µm, and the specific surface area is 1.3 m²/g. The battery is prepared according to the manufacturing process of the battery as described above.

### Example 3

In this Example, the positive electrode active material is composed of lithium manganese iron phosphate and lithium-rich lithium ferrite, where the addition ratio of lithium-rich lithium ferrite is 3.1%. The particle size D50 of lithium manganese iron phosphate is 1.2 µm, and the specific surface area is 13 m²/g. The D50 of lithium-rich lithium ferrite is 10 µm, and the specific surface area is 1.3 m²/g. The battery is prepared according to the manufacturing process of the battery as described above.

### Example 4

In this Example, the positive electrode active material is composed of lithium manganese iron phosphate and lithium-rich lithium ferrite, where the addition ratio of lithium-rich lithium ferrite is 0.5%. The particle size D50 of lithium manganese iron phosphate is 1.2 µm, and the specific surface area is 13 m²/g. The D50 of lithium-rich lithium ferrite is 10 µm, and the specific surface area is 1.3 m ²/g. The battery is prepared according to the manufacturing process of the battery as described above.

### Example 5

In this embodiment, the positive electrode active material is composed of lithium manganese iron phosphate and lithium-rich lithium ferrite, where the addition ratio of lithium-rich lithium ferrite is 5.0%. The particle size D50 of lithium manganese iron phosphate is 1.2 µm, and the specific surface area is 13 m²/g. The D50 of lithium-rich lithium ferrite is 10 µm, and the specific surface area is 1.3 m²/g. The battery is prepared according to the manufacturing process of the battery as described above.

### Example 6

In this embodiment, the positive electrode active material is composed of lithium manganese iron phosphate and lithium-rich lithium ferrite, where the addition ratio of lithium-rich lithium ferrite is 2.9%. The particle size D50 of lithium manganese iron phosphate is 0.8 µm, and the specific surface area is 18 m²/g. The D50 of lithium-rich lithium ferrite is 5 µm, and the specific surface area is 2.4 m²/g. The battery is prepared according to the manufacturing process of the battery as described above.

### Example 7

In this embodiment, the positive electrode active material is composed of lithium manganese iron phosphate and lithium-rich lithium ferrite, where the addition ratio of lithium-rich lithium ferrite is 2.9%. The particle size D50 of lithium manganese iron phosphate is 1.6 µm, and the specific surface area is 8 m²/g. The D50 of lithium-rich lithium ferrite is 15 µm, and the specific surface area is 0.2 m²/g. The battery is prepared according to the manufacturing process of the battery as described above.

### Comparative Example 1

In this comparative example, the positive electrode active material is only composed of lithium manganese lithium ferrite, the particle size D50 of the lithium manganese iron phosphate is 1.2 µm, and the specific surface area is 13 m²/g. The battery is prepared according to the manufacturing process of the battery as described above.

### Comparative Example 2

In this comparative example, the positive electrode active material is composed of lithium manganese iron phosphate and lithium-rich lithium ferrite, where the addition ratio of lithium-rich lithium ferrite is 0.3%. The particle size D50 of lithium manganese iron phosphate is 1.2 µm, and the specific surface area is 13 m²/g. The D50 of lithium-rich lithium ferrite is 10 µm, and the specific surface area is 1.3 m²/g. The battery is prepared according to the manufacturing process of the battery as described above.

### Comparative Example 3

In this comparative example, the positive electrode active material is composed of lithium manganese iron phosphate and lithium-rich lithium ferrite, where the addition ratio of lithium-rich lithium ferrite is 6%. The particle size D50 of lithium manganese iron phosphate is 1.2 µm, and the specific surface area is 13 m²/g. The D50 of lithium-rich lithium ferrite is 10 µm, and the specific surface area is 1.3 m²/g. The battery is prepared according to the manufacturing process of the battery as described above.

### Comparative Example 4

In this comparative example, the positive electrode active material is composed of lithium manganese iron phosphate and lithium-rich lithium ferrite, where the addition ratio of lithium-rich lithium ferrite is 2.9%. The particle size D50 of lithium manganese iron phosphate is 1.8 µm, and the specific surface area is 6 m²/g. The D50 of lithium-rich lithium ferrite is 3 µm, and the specific surface area is 2.6 m²/g. The battery is prepared according to the manufacturing process of the battery as described above.

The batteries in Examples 1-7 and Comparative Examples 1-4 were subjected to gram capacity test, DCR test, cycle test, EOL Mn deposition test and rate performance test (3C capacity retention rate). The gram capacity test method includes: placing the battery in a constant temperature box at 25±2°C, charging the battery to 4.2V at 0.33C constant current and constant voltage, with a cut-off current of 0.05C; leaving the charged battery for 30 minutes; discharging the resultant battery at 0.33C constant current to 2.5V. The capacity of the discharge process/weight of active material was the gram capacity. The DCR test method includes: placing the battery a constant temperature box at a 25±2°C, charging the battery to 4.2V at 0.33C constant current and constant voltage, with a cut-off current of 0.05C; leaving the charged battery for 30 minutes; discharging the left battery at 0.33C constant current to 80% SOC; leaving the result battery for 1h, in which the voltage was recorded as U₁; then discharging the result battery for 10s at 1C (the current is expressed as A) constant current, in which the voltage was recorded as U₂; (U₁ -U₂)/A is the DCR data. The cycle test method includes: placing the battery in a 25±2°C constant temperature box, charging the battery at 1C constant current and constant voltage to 4.2V, with a cut-off current of 0.05C; leaving the charged battery for 30 minutes; discharging the resultant battery at 1C constant current to 2.5V; leaving the discharged battery for 30 minutes; repeating the above steps until the discharge capacity/initial discharge capacity = 80%, which was recorded as the number of cycles. EOL Mn deposition test method includes: discharging the battery that has been cycled to 80% SOH, disassembling and removing the negative electrode sheet, scraping the negative electrode powder on the current collector, and then performing an ICP test to test the manganese content. The rate performance (3C capacity retention rate) test method includes: placing the battery in a constant temperature box at 25 ± 2°C, charging the battery to 4.2V at 0.1C constant current and constant voltage, with a cutoff current of 0.05C, leaving the charged battery for 30 minutes, discharging the resultant battery to 2.5V at 0.1C constant current, in which the discharge capacity was recorded as Q₀; charging to 4.2V at 0.1C constant current and constant voltage, with a cutoff current of 0.05C, leaving the above battery for 30 minutes, discharging the resultant battery to 2.5V at 3C constant current, in which the discharge capacity was recorded as Q; Q/Q₀ was the 3C capacity retention rate. The results are shown in Table 1:

**Table 1 Performance test results of different Examples and Comparative Examples**

| | Gram capacity (mAh/g) | DCR (mΩ) | Cycle times | EOL Mn deposition (ppm) | 3C capacity retention rate % |
|---|---|---|---|---|---|
| Example 1 | 139.8 | 1.23 | 3880 | 295 | 93.6 |
| Example 2 | 139.5 | 1.21 | 3950 | 210 | 85 |
| Example 3 | 139. 5 | 1.2 | 3975 | 212 | 80.2 |
| Example 4 | 137.2 | 1.21 | 3515 | 300 | 94 |
| Example 5 | 139 | 1.2 | 3910 | 215 | 75 |
| Example 6 | 139.3 | 1.19 | 3845 | 208 | 86 |
| Example 7 | 139.1 | 1.2 | 3835 | 209 | 84.3 |
| Comparative Example 1 | 136.0 | 1.35 | 3500 | 300 | 95.1 |
| Comparative Example 2 | 136.2 | 1.36 | 3490 | 298 | 84.6 |
| Comparative Example 3 | 136.1 | 1.20 | 3400 | 215 | 70.5 |
| Comparative Example 4 | 134.6 | 1.40 | 3320 | 213 | 82 |

As may be seen from Table 1, compared with Comparative Example 1 in which no lithium-rich lithium ferrite is added in the positive electrode active material, the gram capacity and cycle performance of Example 1, after adding 1.6% of lithium-rich lithium ferrite, are greatly improved. Moreover, compared with Comparative Example 1, the rate performance (3C capacity retention rate) of Example 1 was also maintained at a high level, there was no obvious change in deposition of manganese at the negative electrode, and the DCR was reduced. Compared with Comparative Example 1, 2.9% of lithium-rich lithium ferrite was added in the positive electrode active material in Example 2, and the gram capacity and cycle number of Example 2 were greatly improved compared with Comparative Example 1, and the deposition of manganese at the negative electrode was reduced, and the DCR was also reduced. But, due to the high proportion of lithium-rich lithium ferrite added, the rate performance of Example 2 was greatly reduced. Compared with Comparative Example 1, 3.1%, 0.5 %, 5.0%, 2.9% and 2.9 % of lithium-rich lithium ferrite were added to the positive electrode active material in Examples 3-7 respectively, and the combination of lithium manganese iron phosphate and lithium-rich lithium ferrite with different particle sizes and specific surface areas were used. Both the gram capacity and the cycle number were improved to varying degrees compared with those in Example 1, and the deposition of manganese at the negative electrode was reduced, and the DCR was also reduced. Although lithium-rich lithium ferrite was added in the positive electrode active material in Comparative Example 2, due to the low amount of addition, there was no significant change in the gram capacity, the cycle number, and the deposition of manganese at the negative electrode, i.e., DCR, but the rate performance was reduced compared to Comparative Example 1 without the addition of lithium-rich lithium ferrite. In Comparative Example 3, an excessive amount of lithium-rich lithium ferrite was added, which easily led to excessive gas production, such that the gram capacity of Comparative Example 3 was substantially the same as that comparative Example 1 without the addition of lithium-rich lithium ferrite, the cycle number was reduced, the deposition of manganese at the negative electrode was reduced, and the DCR was increased. That is, although lithium-rich lithium ferrite was added in Comparative Example 3, which resulted in the deposition of manganese at the negative electrode and helped to improve the cycle performance, the excessive amount of lithium-rich lithium ferrite added instead led to a decrease in the final cycle performance, and the significant decrease in rate performance. In Comparative Example 4, the particle size of lithium manganese iron phosphate was too large and the specific surface area was smaller, while the particle size of lithium-rich lithium ferrite was too small and the specific surface area was too large, resulting in the inability to form a good conductive network after the two were compounded. In addition, due to the too large specific surface area of lithium-rich lithium ferrite, the gas production of the battery was increased and the side reactions were increased which resulted in the decease of the cycle performance, while the rate performance were also decreased significantly.

In summary, in the embodiments of the present disclosure, by including lithium manganese iron phosphate and lithium-rich lithium ferrite in the positive electrode active material, it is possible by lithium-rich lithium ferrite to remedy the problems of low gram capacity and poor cycle performance when lithium manganese iron phosphate is used alone, and maintain good rate performance. By controlling the addition ratio of lithium-rich lithium ferrite within an appropriate range, the gram capacity and cycle performance are improved to varying degrees, and a high rate performance is maintained. By compounding lithium manganese iron phosphate with a small particle size and lithium-rich lithium ferrite with a large particle size, it is ensured that a stacking effect can be achieved when the two are compounded, thereby establishing a more effective conductive network, and better exerting the effect of lithium-rich lithium ferrite on improving gram capacity and cycle performance.

## Claims

1. A positive electrode active material, **characterized by** comprising lithium manganese iron phosphate and lithium-rich lithium ferrite;
wherein, a mass ratio of the lithium-rich lithium ferrite added in the positive electrode active material is 0.5%-5%;
a particle size D50 of the lithium manganese iron phosphate is d₁, a particle size D50 of the lithium-rich lithium ferrite is d₂, and 0.05 ≤ d₁/d₂ ≤ 0.32.

2. The positive electrode active material according to claim 1, **characterized in that** the particle size D50 of the lithium manganese iron phosphate satisfies: 0.8 µm ≤ d₁ ≤1.6 µm; or
the particle size D50 of the lithium-rich lithium ferrite satisfies: 5 µm ≤ d₂ ≤ 15 µm.

3. The positive electrode active material according to any one of claims 1-2, **characterized in that** the mass ratio of the lithium-rich lithium ferrite in the positive electrode active material is 0.5%-2%; optionally,
the mass ratio of the lithium-rich lithium ferrite in the positive electrode active material is 1.5%-1.8%; or
the mass ratio of the lithium-rich lithium ferrite in the positive electrode active material is 2%-5%; or
the mass ratio of the lithium-rich lithium ferrite in the positive electrode active material is 3.1%-5%.

4. The positive electrode active material according to any one of claims 1 to 3, **characterized in that** a specific surface area of the lithium manganese iron phosphate is S₁, a specific surface area of the lithium-rich lithium ferrite is S₂, and 7 ≤ S₁/S₂ ≤40.

5. The positive electrode active material according to claim 4, **characterized in that** the specific surface area of the lithium manganese iron phosphate satisfies: 8 m²/g ≤S₁ ≤ 18 m² /g; or
the specific surface area of the lithium-rich lithium ferrite satisfies: 0.2 m²/g ≤ S₂ ≤ 2.4 m²/g.

6. The positive electrode active material according to any one of claims 1 to 5, **characterized in that** in the positive electrode active material, a molar ratio of a lithium element to a manganese element is (1.5-2.9): 1, and a molar ratio of the lithium element to an iron element is (1.7-3.5) : 1.

7. The positive electrode active material according to any one of claims 1 to 6, **characterized in that** a molecular formula of the lithium manganese iron phosphate is LiₐM_{b}(PO₄)_{c};
wherein, the M is Fe_{1-x-z}MnₓD_{z}, the D is one or more of Mg, Ti, V, Ni, Co, Al, Nb, Y, Mo, Sr, La, Zr or B; 0.95 ≤ a/c ≤ 1.1, 0.90 ≤ b/c≤ 1.15, 1.01 ≤ a/b ≤1.1.

8. A positive electrode slurry, **characterized by** comprising the positive electrode active material according to any one of claims 1 to 7, a conductive agent, a binder and a solvent.

9. The positive electrode slurry according to claim 8, **characterized in that** the positive electrode slurry further comprises a dispersant.

10. The positive electrode slurry according to claim 8 or 9, **characterized in that** the conductive agent is selected from one or more of carbon black, conductive graphite, carbon nanotube, carbon fiber and graphene.

11. The positive electrode slurry according to any one of claims 8-10, **characterized in that** the binder is selected from one of polyvinylidene fluoride, carboxymethyl cellulose, polyacrylic acid or polyamide.

12. The positive electrode slurry according to any one of claims 8-11, **characterized in that** the solvent is selected from at least one of N-methyl-2-pyrrolidone, dimethyl carbonate, ethylene carbonate, diethylene carbonate and dimethyl sulfoxide.

13. A positive electrode sheet, **characterized in that** the positive electrode sheet is prepared using the positive electrode active material according to any one of claims 1-2 or the positive electrode slurry according to any one of claims 8-12.

14. The positive electrode sheet according to claim 13, **characterized in that** a compaction density of the positive electrode sheet is 2.2 g/cm³ -2.6 g/cm³.

15. A battery, **characterized by** comprising the positive electrode sheet according to claim 13 or 14.
